# EUROPEAN PATENT SPECIFICATION

(11) **EP 1 402 731 B1**
(45) Date of publication and mention of the grant of the patent: **27.07.2005**
(21) Application number: 02730658.8
(22) Date of filing: 13.05.2002
(51) Int. Cl.: H04N 7/173, H04N 7/24

(54) **APPARATUS AND METHOD FOR MULTIPLE RICH MEDIA FORMATS VIDEO BROADCASTING**
VERFAHREN UND VORRICHTUNG FÜR VIDEORUNDFUNK VON MEHRFACH ANGEREICHERTEN MEDIENFORMATEN
DISPOSITIF ET PROCEDE POUR VIDEOTRANSMISSION EN FORMATS MULTIMEDIA ENRICHIS MULTIPLES

(30) Priority: 17.05.2001 US 291310 P
(43) Date of publication of application: 31.03.2004
(73) Proprietor: Optibase, 46725 Herzlia (IL)
(72) Inventor: BIALIK, Gil, 52302 Ramat-Gan (IL); ROUSSO, Moshe, 48075 Rosh Ha'ayin (IL); ROSEN, Avraham, 48900 Elad (IL); CHERNILOV, Alexander, 46504 Herzlia (IL); ARDEL, Ehud, 37808 Givat Ada (IL)
(74) Representative: Hofmann, Harald
(86) International application number: PCT/IL2002/000366
(87) International publication number: WO 2002/093925

(56) References cited:
- EP-A- 0 691 778
- WO-A-99/12349
- US-A- 5 805 821
- US-A- 5 815 146
- US-A- 6 118 976
- SMITH J R ET AL: "Transcoding Internet content for heterogeneous client devices" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, 31 May 1998 (1998-05-31), pages 599-602, XP010289378 ISBN: 0-7803-4455-3
- WILLEBEEK-LEMAIR M H ET AL: "On multipoint control units for videoconferencing" , LOCAL COMPUTER NETWORKS, 1994. PROCEEDINGS., 19TH CONFERENCE ON MINNEAPOLIS, MN, USA 2-5 OCT. 1994, LOS ALAMITOS, CA, USA,IEEE COMPUT. SOC, PAGE(S) 356-364 XP010128913 ISBN: 0-8186-6680-3 the whole document

## Description

### CROSS-REFERENCE TO RELATED PATENT APPLICATIONS

This patent application claims priority from and is related to U.S. Provisional Patent Application Serial Number 60/291,310, filed May 17,2001.

### FIELD OF THE INVENTION

The present invention relates to the processing of multiple video and audio data stream sources and formats and, in particular, to concurrent conversion of multiple video and audio formats and sources into different video and audio formats, in a multi input - multi output scalable and flexible system.

### BACKGROUND OF THE INVENTION

The plurality of formats, interfaces, media types, access networks and physical connections involved in video/audio streaming makes the design, implementation and control of digital video/audio broadcast systems very complex.

The following list describes exemplary common standards used today in broadcast systems:
1. Uncompressed Video/Audio: Analog Composite, Analog S-Video, Digital SDI
2. Video color systems: PAL, NTSC, SECAM
3. Digital Video/Audio compression formats: MPEG1, MPEG2, MPEG4, WMT (Microsoft Windows Media Technology), QT (Apple QuickTime), RN (Real Networks), H26L and other proprietary and non-proprietary formats.
4. Audio interfaces: Analog Balanced, Analog Unbalanced, Digital Balanced and Unbalanced.
5. Compressed Audio/Video transmission protocols (Media interfaces): DVB-ASI, DVB-S, DVB-C, DHEI, SDTI, DV etc.
6. Network interfaces: Ethernet, ATM, IP, SDH etc.
7. Network interface physical layer: Copper twisted pair, Optical cables, Coaxial cable, USB etc.
8. Network layer 4 protocols: UDP, RTP, TCP etc.
9. Storage interfaces: SCSI, IDE, IEEE1394 -FireWire etc.
10. Management protocols: SNMP, Telnet, RS232, RTSP, XML etc.

Existing video/audio processing systems require multiple and different apparatus, with individual and different control of every element. Some flexibility can be obtained by combining various building blocks (e.g. Encoders, Decoders, Network interfaces, Video interfaces), and connecting them by external wires to a common control unit. However, this practice requires coordination between many equipment vendors, consumes large office space, and hence lacks flexibility and scalability.

There is a need for a modular, configurable system for seamless concurrent handling of various video and audio input/output requirements in a scalable, robust manner.

### SUMMARY OF THE INVENTION

The apparatus and method of the present invention as defined in the appended claims allow for multiple video and audio formats and sources to be converted into different formats in a concurrent mode of operation.
The main elements of the system of the present invention are:
a. A Media Format Matrix (MFM) module, having multiple input and output channels.
b. A Communicator module, having various network interfaces.
c. A Storage module.

The implementation of the system is based on standard networking protocols, used to transfer the data between the internal MFM, Communicator and storage elements. The system platform is built around an internal switched network infrastructure. This internal infrastructure enables the introduction of multiple interfaces and processing modules to the system, thus providing extensibility for future elements that will be required as new technologies emerge.

The use of standard network protocols for transmission of data and control inside the system provides flexibility, simplicity and scalability to the system. The internal network topology is designed to eliminate any single point of failure, thus increasing the system's reliability.

The management architecture of the present invention provides a scalable infrastructure for controlling and monitoring single or multiple internal and external system modules, and in addition single, multiple or clusters of systems.

The system of the present invention can be used for a large variety of video and audio streaming environments and applications, serving a large-scale number of receivers and transmitters. Using the concept of the present invention may serve as a basis for any video/audio streaming system architecture.

### BRIEF DESCRIPTION OF THE DRAWINGS

Fig. 1 shows the basic MFM interfaces according to a first embodiment of the present invention;
Fig. 2 shows the MFM connected to the communicator unit according to a second embodiment of the present invention;
Fig. 3 shows the MFM and communicator of Fig. 2, with added storage devices, according to a third embodiment of the present invention;
Fig. 4 is a schematic representation of the system architecture and internal data flows; and
Fig. 5 depicts an exemplary application using the system of the present invention.

### List of abbreviations commonly used in this document

ADSL - Asymmetric Digital Subscriber Line
ASI - Asynchronous Serial Interface
ATM - Asynchronous transfer mode
CO - Central Office
DVB - Digital Video Broadcast
DSLAM - Digital Subscriber Line Access Multiplexer
IP - Internet Protocol
MFM - Multimedia Format Matrix
MPEG - Motion Picture Expert Group
RTP - Real Time Protocol
RTSP - Real Time Streaming Protocol
SDH - Synchronous Digital Hierarchy
SDI - Serial Digital Interface
SNMP - Simple Network Management Protocol
TCP - Transmission Control Protocol
VOD - Video On Demand
UDP - User Datagram Protocol
USB - Universal Serial Bus
WMT - Windows Media Technology

### DETAILED DESCRIPTION OF PREFERRED EMBODIMENTS

The apparatus and method of the present invention are intended to overcome the shortcomings of existing video/audio processing systems, used for interchanging audio and video streams over a variety of media and network infrastructures and protocols. The functionalities of the present invention include a variety of video and audio processing and transmission features (e.g. Encoding, Decoding, Transcoding , Pre-Processing, splicing Transmission & Reception of video/audio streams over various network and media interfaces etc), that can all be active simultaneously, and are all implemented using a simple set of internal modules that will be described below. The apparatus of the present invention provides flexible means of handling the various video, audio and network protocols requirements, while the method of implementation assures flexibility and scalability.

### The Media Format Matrix (MFM) Functionality

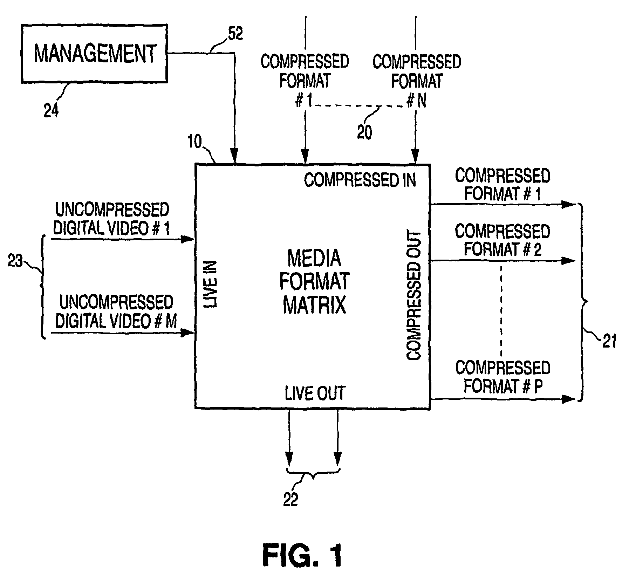

Fig. 1 presents a first embodiment of the present invention. Media Format Matrix (MFM) 10 is connected to multiple input channels, such as compressed video/audio streams 20 and uncompressed video/audio streams 23. MFM 10 is also connected to multiple output channels, such as compressed video/audio streams 21 and uncompressed video/audio streams 22.

Management unit 24, such as HPOV (HP Open View), is connected to MFM 10 by means of a standard communication interface 52 (e.g. Simple Network Management Protocol - SNMP over IP over Ethernet)

The multiple input and output interfaces allow for multiple input formats to be transcoded, encoded, decoded or otherwise processed into different output streams, thus performing a parallel video/audio formats conversion for as many inputs and outputs as required.

The modular architecture of the MFM, as will be explained below, allows for multiple inputs and outputs of many types and for concurrent performance of multiple operations.

The implementation method of the switching fabric on which the MFM is based provides, in addition, simple means of duplicating the incoming or the processed streams, by that allowing seamless production of multiple copies in multiple formats out of the same video and audio stream.

The MFM has the capability of switching its mode of operation on-the-fly, thus enabling video splicing - i.e. seamless switching from one input source (e.g. movie) to the another (e.g. commercial clip) while maintaining an un-interrupted output.

The MFM switching capabilities allow also for simple implementation of redundancy. The MFM will be able to switch from one input stream to another when a failure is detected in the original input interface. The flexibility of the system allows defining N components as redundant to M others (M+N redundancy).

In addition, the implementation method of the MFM, Communicator and Storage modules (described below) allows also the utilization of internal components within the system as redundant to others.

The basic functionality modes enabled simultaneously within the MFM are summed up in the following table:

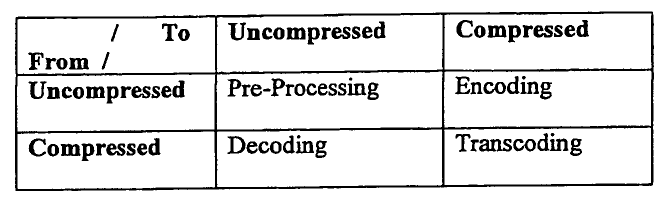

For the purpose of this document, the following video and audio processing definitions will apply:
a. "Encoding" or "Compressing" - The process of compressing audio and video from their uncompressed form (analog or digital) into a predefined compressed format (e.g. MPEG, WMT etc).
b. "Decoding" - the process of converting audio and video from a compressed form, into an uncompressed stream (analog or digital)
c. "Transcoding" - the process of converting audio and video from one compressed format to another compressed format. Format change can include conversion from one compression protocol to another (e.g. MPEG to WMT), or conversion of other stream parameters (e.g. Bit rate or picture resolution) while maintaining the same compression protocol.
d. "Pre-Processing" - the process of handling uncompressed video and audio, stream, to enhance their visual / audible properties.

Typical formats of compressed video and audio that may be implemented are, for example: MPEG1, MPEG2, MPEG4, REAL video, QuickTime and WMT. Examples of uncompress live video and audio: Composite, S-Video, SDI, balanced/Unbalanced audio etc.

### Communicator Functionality

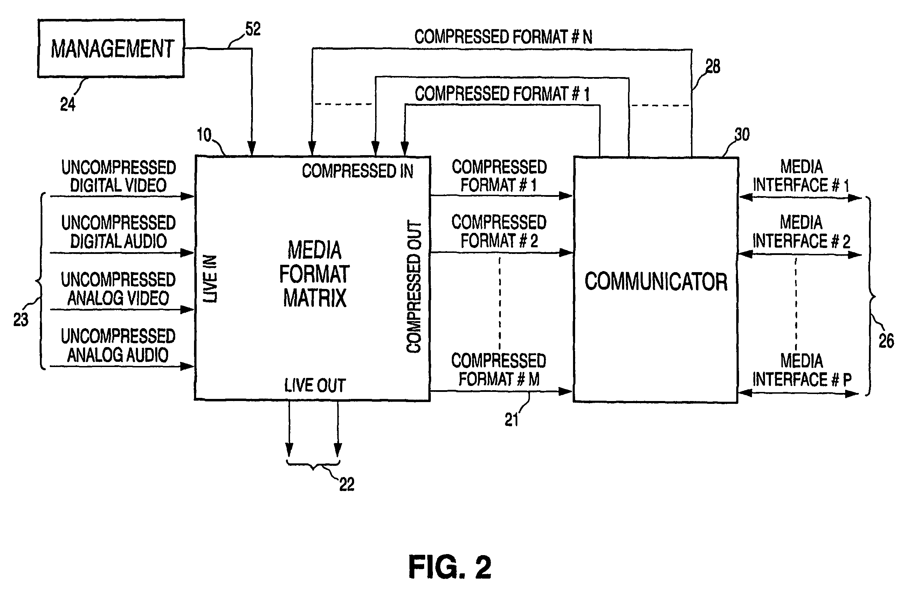

Fig. 2 presents a second embodiment of the present invention. A communicator module 30 is connected to MFM 10. The Communicator module 30 allows for accessibility to a variety of communication transport networks, such as but not limited to: IP, ATM and SDH. The functionalities of the Communicator module 30 in this embodiment of the invention are:
a. Receiving input streams 26 from a local or wide area networks and feeding them into the MFM.
b. Receiving 21 compressed streams from the MFM and transmitting them to local or wide area distribution networks.

### Storage Functionality

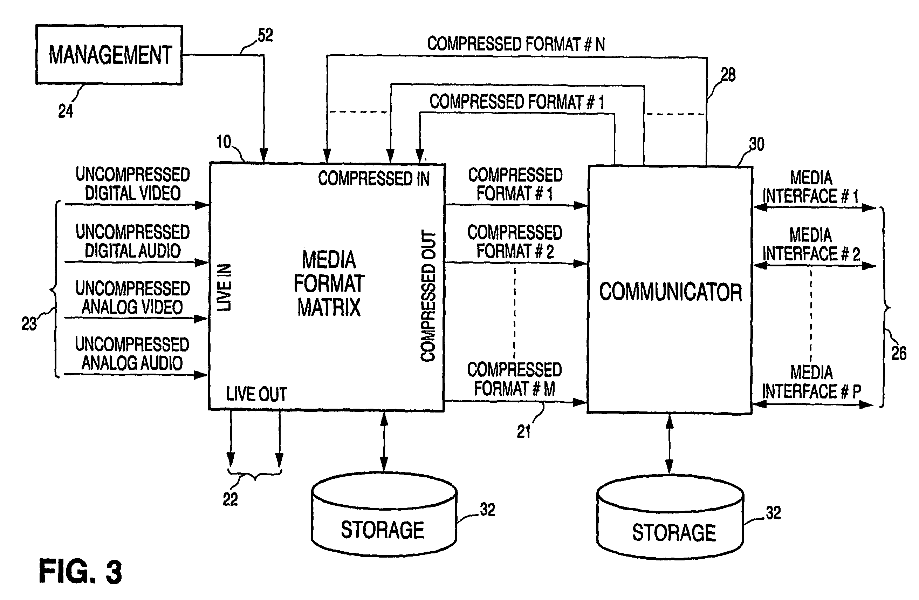

In a further embodiment of the present invention, depicted in Fig. 3, a storage device 32, such as SCSI Raid, IDE, IEEE1394 FireWire or others, can be connected to the MFM 10 or the Communicator module 30. The storage device 32 enables the system to act as a video on-demand (VOD) server. The use of the storage 32 may reduce the number of required format conversions by providing an "input once - output many" mode of operation. A file may be initially stored in the storage module 32 in a specific format, and later be retrieved upon request by the MFM, transcoded and simultaneously transmitted to its destination or destinations. For example, a content supplier can broadcast a video stream from one stored file to as many clients as desired simultaneously, in different video formats and on different network interfaces.

An additional mode of operation is off-line transcoding. In this mode a video/audio file is stored in the storage module in a specific format, and later retrieved by the MFM, transcoded and saved back to the storage. This mode allows later a simple retrieval of the file without the need to simultaneously transcode it upon transmission.

A similar storage device may also, or alternatively, be connected to the communicator module 30.
The storage connectivity adds more functionality modes to the MFM of the present invention, which may be summed up as follows:

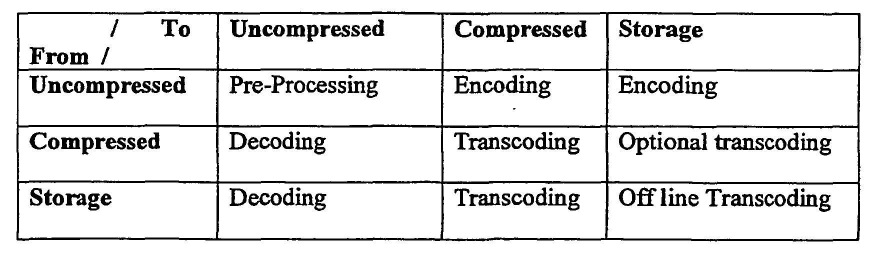

### MFM, Communicator and Storage - Method of Implementation

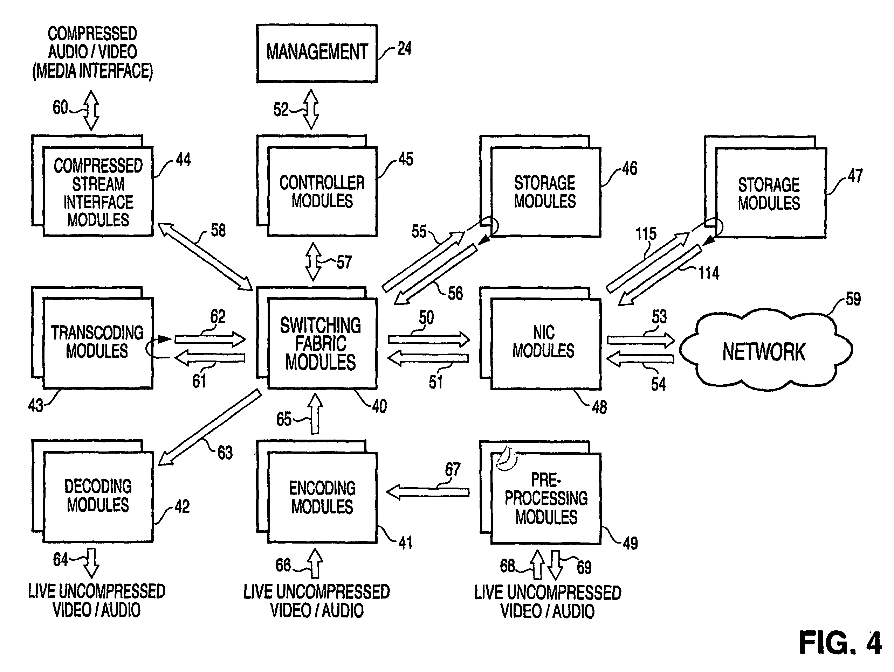

Fig. 4 is a schematic representation of the MFM, Communicator and storage module architecture and internal data flow.

The MFM is implemented on the basis of a star topology switching fabric. The switching fabric is implemented in a central module, connected separately to every other module in the system (hence "star" topology). The star topology ensures uninterrupted and uncoupled performance of each separate internal and external module, and allows for concurrent multiple operation of various functions, such as encoding, decoding and transcoding. The switching fabric module 40 can use standard network protocols for transmission and switching, e.g. IP over Ethernet, ATM or proprietary ones. IP over Ethernet network protocol is the preferred network protocol to be used by the switching fabric modules, as IP over Ethernet star topology agrees with the industry standard Picmg 2.16 and other emerging industry standards.

To allow redundancy it is preferable to use a multi-star topology, in which several switching fabric modules are each connected to all other modules in the system. This way if one of the switching modules fails, another one can be used instead without interrupting the data flow in the system. A dual star topology (two switching fabric modules) is the preferred implementation, as it agrees with industry standard Picmg 2.16

### Internal Modules Description

a. Encoding modules 41 - The encoding modules receive uncompressed video and audio 66 or 67, and compress (encode) them into a predefined format. The compressed stream is then transmitted 65 from the encoding modules to the MFM switching fabric module 40.
   The system may include many encoding modules, used to encode to various compressed formats.
b. Decoding modules 42 - The decoding modules receive compressed video and audio streams 63 from the switching fabric, decode them into predefined uncompressed format, and output the generated uncompressed streams 64.
   The system may include many decoder modules, used to decode to many uncompressed audio/video formats (analog, digital etc).
c. Compressed stream interface modules 44 - The compressed stream interface modules receive compressed stream 60 inputs, encapsulate them into the network protocol used by the switching fabric (e.g. IP over Ethernet), and transmit them 58 to the switching fabric module 40. Alternatively the compressed stream interface modules 44 can be used to receive compressed streams from the switching fabric module 40, and transmit them 60 outside the system in a predefined format (e.g. DVB-ASI).
   The compressed stream module can, for example, be used to receive DVB transmissions from a satellite feed, extract specific programs, and transmit them using IP over Ethernet encapsulation towards the switching fabric module 40. Additional functionality that may be implemented in the compressed stream interface module is scrambling and descrambling (conditional access) of compressed signals to and from satellite and cable TV feeds.
   The system can include many compressed stream interface modules 44, used as interfaces to many compressed audio/video transmission formats (like DVB-ASI, DVB-DHEI, DVB-S etc) and conditional access formats.
d. Transcoding modules 43 - Each transcoding module receives a compressed streams 61 from the switching fabric 40, transcodes it to a different format (or bit rate, or resolution), and feeds the compressed stream 62 back to the switching fabric 40.
   The transcoding module 43 implementation can be based on a combination of decoder and encoder modules, with optional pre-processing modules, as the decoder is used to uncompress the incoming compressed stream 61, and the encoder is used to compress the stream to its target compressed format 62. The system can include many transcoding modules 43, to enable concurrent conversion to and from various audio/video formats (e.g. MPEG2 to WMT, MPEG2 to MPEG4, MPEG2 to MPEG2 bit rate change etc).
e. Storage modules 46, 47 - Each storage module receives compressed streams 55, 115 from the switching fabric or the NIC module and stores it. The storage module can then retrieve the compressed stored stream and transmit it back 56, 114 to the switching fabric 40 or NIC module 48 for further processing and transmission. The system can include many storage modules to allow scalable storage and retrieval of many streams simultaneously.
f. Network Interface Card (NIC) modules 48 - The NIC module 48 performs the Communicator functionalities of the system. It transmits the streams 50 coming from the switching fabric 40 into the required network interfaces 53, and receives streams 54 from the network 59 and directs them 51 towards the switching fabric 40.
   The NIC module 48 serves as the system's front end towards the distribution network 59. In addition the NIC module 48 provides connectivity to storage modules 47. The system can include many NIC modules to support various network interfaces (e.g. IP, ATM, IP over ATM etc) and storage devices.
g. Pre-Processing modules 49 - The Pre-Processing modules receive uncompressed audio and video 68, perform picture and audio quality enhancement processing upon these streams, and transmit the resultant uncompressed streams towards encoding module 41 or towards outside the system 69 for external processing.
h. Additional modules (not shown) - as new video and audio processing techniques and new network protocols may emerge, the system flexible and scalable architecture allows seamless addition of new modules. The new modules need only to be equipped with the appropriate interface to the switching fabric module 40, and to have the appropriate predefined control protocol interface to be integrated into the system.
i. Controller modules 45 - The controller modules serve as the system's management and control center. The controller module is responsible for the configuration of all the other modules according to requests received via the system management interface 52. The Controller module is responsible for monitoring the health of the internal system modules, and may activate redundant components upon failure of others. To allow redundancy of the controller module itself, more than one controller modules may be connected to the system. A Two Controller configuration is the preferred implementation, as it agrees with industry standard Picmg 2.16
j. Switching fabric modules 40 - The Switching fabric modules are responsible for managing all network streaming running between the various system modules, and for routing each packet/cell coming out of the modules towards its predefined destination.

The Switching fabric module 40 also serves as:
1. Stream aggiegator; by delivering all network outbound streams to the NIC module 48.
2. Multicast router - duplicating a single stream and transmitting its copies to several processing modules. This way the system can produce several streams in several formats out of a single compressed or uncompressed stream introduced as input. The Multicast functionality can be based on standard routing algorithms (e.g. IP multicast).
When implementing Picmg 2.16 compliant switching fabric described above, a standard off the shelf switching board may be used (e.g. Performance Technologies PTI cpc4401).

### Data flow - Utilization of the MFM, Communicator and Storage modules

The internal system modules described above can be used in a variety of combinations to produce all the required functionalities of the system. Following is an exemplary list:
a. Encoding functionality
   An uncompressed input stream 66 enters the system via the appropriate interface located on the encoding module 41. Alternatively, the uncompressed stream can be introduced 68 to the system via a pre-processing module 49, enhanced by this module, and then fed 67 to the encoder module.
   The encoding module compresses the stream to the desired format and bit rate, and the resultant compressed stream is then transmitted 65 towards the switching fabric 40. The compressed stream can then be directed by the switching fabric towards the NIC 48 module and transmitted to the distribution network 59, and/or transmitted to a compressed stream interface module 44, to be transmitted outside on a compressed stream interface 60 (e.g. DVB-ASI). The flexible architecture of the system allows in addition to monitor the quality of the resultant compressed stream. This can be achieved by configuring the switching fabric 40 to generate an additional copy of the compressed stream received from the encoder 41 towards a decoder module 42. The decoder module 42 will decode the compressed stream, and provide an uncompressed audio/video signal 64 that can be compared to the original uncompressed stream 66 or 68.
b. Decoding functionality
   A compressed stream enters the system via the compressed stream interface module 44 (e.g. DVB input feed from satellite), and is transmitted in its compressed format 58 to the switching fabric module. Alternatively the compressed stream may be received from the network 59 (e.g. internet video clip), received by the NIC 48 module, and then fed 51 to the switching fabric module 40. The compressed stream is then directed 63 by the switching fabric module to one or more decoding modules 42, which decode the stream to its uncompressed format and outputs it 64.
c. Transcoding functionality
   A compressed stream enters the system via the compressed stream interface module 44 (e.g. DVB input feed from satellite), and is transmitted in its compressed format 58 to the switching fabric module. Alternatively the compressed stream may be received from the network 59 (e.g. internet video clip), received by the NIC 48 module, and then fed 51 to the switching fabric module 40.
   The compressed stream is then directed 61 by the switching fabric module to one or more transcoding modules 43, which transcodes the compressed stream to its desired format (or bit rate, or resolution) and feeds the stream back 62 to the switching fabric 40.
   The transcoded stream can now be directed by the switching fabric:
   towards NIC modules 48 to be transmitted to the network 59, and/or towards Compressed Stream Interface modules 44 to be transmitted 60 as compressed media, and/or
   towards decoding modules 42 for decoding to allow content monitoring and viewing 64.
d. Video on demand functionality
   A compressed stream enters the system via the compressed stream interface module 44 or via the NIC module 48. The stream is fed through the switching fabric module 40 or directly via the NIC to the storage module 46 or 47 and saved as a file.
   Alternatively, the stream may enter the system in an uncompressed form 68, 66, encoded by one of the encoding modules 41, and then directed as compressed stream towards the storage modules 46, 47.
   When the stream needs to be retrieved, it is fed back 56, 114 from the storage module towards the switching fabric 40 which directs it 61 towards one of the transcoding modules. The stream is then transcoded to the desired format (or bit rate, or resolution) and transmitted 62 as described above from the transcoding module to the switching fabric 40, and from there directed towards the NIC module 48 and the network 59, and / or directed from the switching module to one or more compressed stream interface modules 44 as compressed media 60.
   Alternatively, the transcoded stream can be saved back 55, 115 into to the storage module (off line transcoding functionality). Later retrieval of the transcoded file will only call for transmission of the stream from the storage towards the switching fabric 40, and then to the NIC module 48 or to Compressed stream interface module 44 to be transmitted outside.

### Management and control architecture:

The external manager 24 (Fig. 4) configures and monitors the system, using management interface 52 to the controller module 45. The controller module 45 controls the system elements (modules) via the switching fabric module 40. The preferred management protocol is SNMP, as the same SNMP MIB can be implemented both in the controller module 45 and the rest of the internal and external modules. This way the system is composed out of modular components with identical management interfaces, each controlled individually by the controller module 45, or directly by the external manager 24.

As IP over Ethernet protocol used by the system's switching fabric for internal streaming and control is identical to the protocols commonly used for local area networks, the system architecture allows simple connectivity of the switching fabric modules to an external local area network, by that allowing:
a. Control of external network elements (e.g. Routers, Video Switchers etc) by the internal controller module 45.
b. Connecting several MFM units to form an MFM cluster.

### Exemplary System description

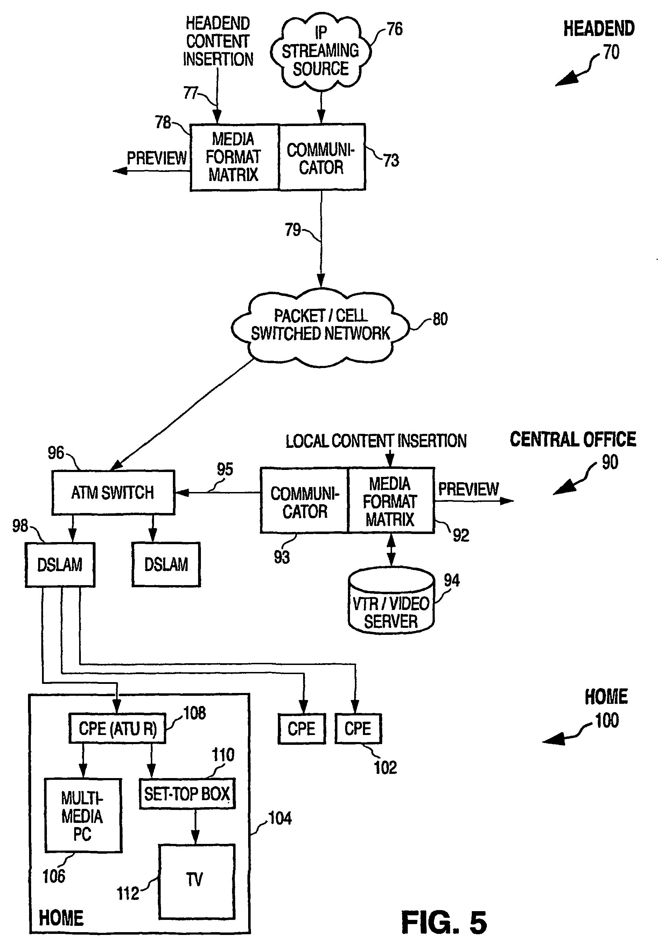

Fig. 5 presents an exemplary ADSL (Asymmetric Digital Subscriber Line) video distribution system, to be implemented with the system of the present invention, serving several functions:
As a HeadEnd perspective, the system can be used as a main encoding or transcoding engine, where several different inputs and formats are encoded to a variety of output streams, which can then be transported on any packet/cell switching based networks.
In a Central Office perspective, the system can provide video server system functionalities, by that allowing reduction of streams storage space required. In addition the Central Office system can be used to transcode and transmit audio and video inserted locally.
   a. HeadEnd 70 Data flow:
      At the service provider's HeadEnd, live uncompressed/compressed video sources 76, 77 are fed to the MFM. Compressed streams may originate from satellite feeds or an IP distribution network 76. Uncompressed streams may originate from Video tape recorders or TV cameras.
      The MFM converts the incoming streams to formats that can be distributed in the service provider's distribution network 80 (typically low and constant bit rate streams). In addition, incoming content preview 78 is provided using the decoding functionality of the MFM.
      The Communicator element 73 transmits the converted streams to the Wide Area Network (WAN) 80 for distribution.
   b. Central Office (CO) 90 data flow:
      In the Central Office (CO) local compressed/uncompressed content is introduced into the MFM 92 in the same manner described above for the HeadEnd. The MFM 92 transcodes the local content to a format that can streamed over the DSL network (typically low and constant bit rate). The Communicator 93 is then used to transmit the transcoded streams over the CO's ATM network towards the customers' homes via the DSL lines. In addition, local storage 94 provides Video on demand functionalities to the customers connected to the CO.
      Local and external feeds are streamed out of the CO via a DSL Service Access Multiplexer (DSLAM) 98 to the customers' homes.
   c. Home 100 data flow:
      At the customers homes the video streams are received via the telephone line, and converted to Ethernet by an ATU-R 108 device. The streams are then transmitted to a TV set-top box 110 or to a home PC 106 for viewing.

It is apparent from the example described above that the variety of video and audio processing and streaming functionalities needed to implement the network described in Fig 5 can all be achieved using the system of the present invention. By deploying the apparatus described in the present invention instead of a variety of different existing devices, the service provider deploying the ADSL network can reduce significantly its maintenance costs and occupied office space, gaining the inherent flexibility and scalability that the system of the present invention provides.

## Claims

1. A modular, storage-less, real-time scalable video/audio streaming and switching system comprising
a media format matrix, said media format matrix comprising:
a. at least one star topology packet switching fabric module, for managing network streaming inside said media format matrix;
b. one or more controller modules connected with said at least one switching fabric module and with an external management unit, for configuring and controlling said media format matrix; and
at least one of a group consisting of:
c. one or more encoding modules connected with said switching fabric module, for receiving uncompressed video or audio and converting it into a predefined compressed format;
d. one or more decoding modules connected with said switching fabric module, for receiving compressed video or audio and converting it into a predefined uncompressed format;
e. one or more compressed stream interface modules connected with said switching fabric module, for transmitting compressed data between said switching fabric and an external media interface;
f. one or more transcoding modules connected with said switching fabric module, for receiving compressed streams from said switching fabric, transcoding them into different compressed formats and sending said different compressed stream back to said switching fabric;
g. one or more NIC modules connected with said switching fabric module, for connecting between said media format matrix and one or more distribution networks; and
h one or more pre-processing modules connected with said switching fabric module, for processing uncompressed streams.

2. The system of claim 1, additionally comprising a communicator device connected with said media format matrix, for inputting streams from local or wide area distribution networks into the matrix arid for outputting streams from the matrix to local or wide area distribution networks.

3. The system of claim 1, wherein said external management unit is operable to communicate to at least one of said one or more controller modules a configuration of said matrix.

4. The system of claim 1, wherein said one or more switching fabric modules use a standard network protocol.

5. The system of claim 4, wherein said standard network protocol is IP over Ethernet.

6. The system of claim 1, wherein said media format matrix is connected with multiple input channels.

7. The system of claim 6, wherein said multiple input channels comprise compressed video/audio and uncompressed video/audio.

8. The system of either of claims 1 or 6, wherein said media format matrix is connected with multiple output channels.

9. The system of claim 8, wherein said multiple output channels comprise compressed video/audio and uncompressed video/audio.

10. The system of claim 1, wherein said media format matrix modules and said external management unit use a common management protocol.

11. The system of claim 10, wherein said common management protocol is SNMP.

12. The system of claim 1, wherein said one or more compressed stream interfaces additionally serve for scrambling and/or descrambling compressed signals.

13. The system of claim 1, comprising more than one switching fabric modules, and wherein each of said switching fabric modules is connected to at least another one of said switching fabric modules, and wherein said switching fabric modules create a cluster of connected switching fabric modules.

14. The system of claim 1, comprising more than one switching fabric modules, and wherein each of said switching fabric modules is connected to all of said media format matrix modules for enabling redundancy of said media format matrix modules.

15. The system of claim 1, wherein said one or more controller modules control external network elements.

16. The system of claim 15, wherein said external network elements comprise one of the group including router and video switcher.

17. The system of claim 1, wherein said external management unit directly controls at least one of said media format matrix modules.

18. A method of encoding video/audio data streams, comprising the steps of:
providing a streaming and switching system comprising a media format matrix, said media format matrix comprising:
a. at least one star topology switching fabric module, for managing network streaming inside said media format matrix;
b. one or more encoding modules connected with said switching fabric module, for receiving uncompressed video or audio and converting it into a predefined compressed format;
c. one or more compressed stream interface modules connected with said switching fabric module, for transmitting compressed data between said switching fabric and an external media interface;
d. one or more NIC modules connected with said switching fabric module, for connecting between said media format matrix and one or more distribution networks; and
e. one or more controller modules connected with said switching fabric module and with an external management unit, for configuring and controlling said media format matrix;
inputting an uncompressed data stream into the system;
converting said data stream into a desired compressed format and/or bit rate; and
transmitting said compressed data towards one of said switching fabric modules.

19. The method of claim 18, wherein said media format matrix additionally comprises one or more pre-processing modules connected with said switching fabric module; and
additionally comprising, after said step of inputting an uncompressed data stream, a step of preprocessing said uncompressed data stream.

20. The method of claim 18, wherein said media format matrix additionally comprises one or more decoding modules; and
additionally comprising, after said step of converting, a step of generating an additional copy of said compressed data and directing said additional copy to one of said decoding modules.

21. The method of claim 20, wherein said decoder module decodes said additional copy of said compressed data and wherein said decoded data is compared to said uncompressed data stream input into the system.

22. The method of claim 18, wherein said uncompressed data stream is input via an interface of one of said encoding modules;

23. The method of claim 19, wherein said uncompressed data stream is input via one of said pre-processing modules.

24. The method of claim 18, additionally comprising, after said step of transmitting, the steps of:
directing said compressed data from said switching fabric module towards one of said NIC modules; and
transmitting said compressed data to a distribution network.

25. The method of claim 18, additionally comprising, after said step of transmitting, the steps of:
directing said compressed data from said switching fabric module towards one of said compressed stream interface modules; and
transmitting said compressed data out of said media format matrix on a compressed stream interface.

26. A method of decoding video/audio data streams, comprising the steps of:
providing a streaming and switching system comprising a media format matrix, said media format matrix comprising:
a. at least one star topology switching fabric module, for managing network streaming inside said media format matrix;
b. one or more decoding modules connected with said switching fabric module, for receiving compressed video or audio and converting it into a predefined uncompressed format;
c. one or more interface means connected with said switching fabric module, for transmitting compressed data between said switching fabric and an external media interface; and
d. one or more controller modules connected with said switching fabric module and with an external management unit, for configuring and controlling said media format matrix;
inputting a compressed data stream into the system and transmitting it to one of said switching fabric modules;
directing said compressed stream from said switching fabric module to one or more of said decoding modules; and
decoding said stream to one or more uncompressed format.

27. The method of claim 26, wherein said interface means comprises one or more compressed stream interface modules connected with said switching fabric module.

28. The method of claim 26, wherein said interface means comprises one or more NIC modules connected with said switching fabric module.

29. A method of transcoding video/audio data streams, comprising the steps of:
providing a streaming and switching system comprising a media format matrix, said media format matrix comprising:
a. at least one star topology switching fabric module, for managing network streaming inside said media format matrix;
b. one or more interface means connected with said switching fabric module, for transmitting compressed data between said switching fabric and an external network;
c. one or more transcoding modules connected with said switching fabric module, for receiving compressed streams from said switching fabric, transcoding them into different compressed formats and sending said differently compressed stream back to said switching fabric; and
d. one or more controller modules connected with said switching fabric module and with an external management unit, for configuring and controlling said media format matrix;
inputting a compressed data stream to the system;
transmitting said compressed stream to one of said switching fabric modules;
directing said compressed stream to one or more said transcoding modules;
transcoding said compressed stream to a desired format or bit-rate or resolution; and
transmitting said transcoded stream to one said switching fabric modules.

30. The method of claim 29, wherein said interface means comprises one or more compressed stream interface modules.

31. The method of claim 29, wherein said interface means comprises one or more NIC modules.

32. The method of claim 31, additionally comprising the steps of:
transmitting said transcoded stream from said switching fabric module to one of said NIC modules; and
transmitting said transcoded stream from said NIC module to a network.

33. The method of claim 30, additionally comprising the steps of:
transmitting said transcoded stream from said switching fabric module to one of said compressed stream interface modules; and
outputting said transcoded stream from said compressed stream interface module.

34. The method of claim 29, wherein said media format matrix additionally comprises one or more decoding modules; and additionally comprising the steps of:
transmitting said transcoded stream from said switching fabric module to one of said decoding modules;
decoding said transcoded stream; and
monitoring said decoded stream.

## Patentansprüche

1. Ein modulares, speicherloses, in Echtzeit erweiterbares Video-/Audiostreaming- und Schaltsystem, umfassend
eine Medienformatmatrix, wobei die Medienformatmatrix umfasst:
a. zumindest ein paketvermittelndes Schaltmodul mit Stemtopologie zum Managen von Netzwerkstreaming innerhalb der genannten Medienformatmatrix;
b. ein oder mehrere Steuermodule, angeschlossen an das zumindest eine Schaltmodul und eine externe Managementeinheit, zur Konfiguration und Steuerung der genannten Medienformatmatrix; und
zumindest eines aus einer Gruppe, die besteht aus:
c. einem oder mehreren Encodermodulen, die an das genannte Schaltmodul angeschlossen sind, zum Empfangen von unkomprimierten Video- und Audiodaten und deren Überführung in ein vorab definiertes komprimiertes Format;
d. einem oder mehreren Decodermodulen, die an das genannte Schaltmodul angeschlossen, zum Empfangen von komprimierten Video- und Audiodaten und deren Überführung in ein vorab definiertes unkomprimiertes Format;
e. einem oder mehreren Schnittstellenmodulen für komprimierte Datenströme, die an das genannte Schaltmodul angeschlossen sind, um komprimierte Daten zwischen der Schalteinheit und einer externen Medienschnittstelle zu übertragen;
f. einem oder mehreren Transcodermodulen, die an das genannte Schaltmodul angeschlossen sind, zum Empfangen komprimierter Datenströme von der Schalteinheit, Transcodieren dieser in unterschiedliche komprimierte Formate und Senden des unterschiedlich komprimierten Datenstroms zurück an die Schalteinheit;
g. einem oder mehreren NIC-Modulen, die an das genannte Schaltmodul angeschlossen sind, um die genannte Medienformatmatrix mit einem oder mehreren Übertragungsnetzwerken zu verbinden; und
h. einem oder mehreren Vorverarbeitungsmodulen, die an das genannte Schaltmodul angeschlossen sind, um unkomprimierte Ströme zu verarbeiten.

2. System gemäß Anspruch 1, das zusätzliche eine Kommunikationseinrichtung umfasst, verbunden mit der genannten Medienformatmatrix, um Datenströme von lokalen oder Weitverkehrsnetzwerken in die Matrix einzuspeisen, und Datenströme von der Matrix zu lokalen oder Weitverkehrsnetzwerken auszugeben.

3. System gemäß Anspruch 1, in dem die genannte externe Managementeinheit an mindestens eines der genannten einen oder mehreren Steuermodule eine Konfiguration der genannten Matrix kommunizieren kann.

4. System gemäß Anspruch 1, in dem das eine oder die mehreren der genannten Schaltmodule ein Standardnetzwerkprotokoll benutzt.

5. System gemäß Anspruch 4, in dem das Standardnetzwerkprotokoll IP-über-Ethernet ist.

6. System gemäß Anspruch 1, in dem die genannte Medienformatmatrix mit mehreren Eingangskanälen verbunden ist.

7. System gemäß Anspruch 6, worin die mehreren Eingangskanäle komprimiertes Video-/Audiomaterial und unkomprimiertes Video-/Audiomaterial umfassen.

8. System gemäß einem der Ansprüche 1 oder 6, in dem die Medienformatmatrix mit mehreren Ausgangskanälen verbunden ist.

9. System gemäß Anspruch 8, in dem die mehreren Ausgangskanäle komprimiertes Video-/Audiomaterial und unkomprimiertes Video-/Audiomaterial umfassen.

10. System gemäß Anspruch 1, in dem die Medienformatmatrixmodule und die genannte externe Managementeinheit ein gebräuchliches Managementprotokoll einsetzen.

11. System gemäß Anspruch 10, in dem das gebräuchliche Managementprotokoll SNMP ist.

12. System gemäß Anspruch 1, in dem besagte eine oder mehrere Schnittstellen für komprimierte Datenströme zusätzlich zum Verschlüsseln und/oder Entschlüsseln komprimierter Signale dienen.

13. System gemäß Anspruch 1, das mehr als ein Schaltmodul umfasst und in dem jedes der genannten Schaltmodule an mindestens ein weiteres der genannten Schaltmodule angeschlossen ist und die genannten Schaltmodule einen Cluster aus miteinander vernetzten Schaltmodulen bilden.

14. System gemäß Anspruch 1, das mehr als ein Schaltmodul umfasst und in dem jedes der genannten Schaltmodule an alle genannten Medienformatmatrizen angeschlossen ist, um Redundanz der Medienfortnatmatrixmodule zu ermöglichen.

15. System gemäß Anspruch 1, in dem besagte(s) eine oder mehrere Kontrollmodul(e) externe Netzwerkelemente steuern.

16. System gemäß Anspruch 15, in dem die genannten externen Netzwerkelemente eines aus der Gruppe umfassen, die Router und Videoswitcher einschließt.

17. System gemäß Anspruch 1, in dem die genannte externe Managementeinheit mindestens eines der genannten Medienformatmatrixmodule direkt steuert.

18. Verfahren zur Codierung von Video- und Audiodatenströmen, umfassend die Schritte:
Bereitstellen eines Streamings- und Schaltsystems, das eine Medienformatmatrix umfasst, wobei die Medienformatmatrix umfasst:
a. mindestens ein Schaltmodul mit Sterntopologie zum Managen von Netzwerkstreaming innerhalb der genannten Medienformatmatrix.
b. ein oder mehrere Encodermodule, verbunden mit genanntem Schaltmodul, um unkomprimiertes Video- oder Audiomaterial zu empfangen und in ein vorab definiertes komprimiertes Format zu überführen;
c. ein oder mehrere Schnittstellenmodule für komprimierte Datenströme, die mit dem genannten Schaltmodul verbunden sind, zur Übertragung von komprimierten Daten zwischen der Schalteinheit und einer externen Medienschnittstelle;
d. ein oder mehrere NIC-Module, die mit dem genannten Schaltmodul verbunden sind, um die genannte Medienformatmatrix mit einem oder mehreren Übertragungsnetzwerken zu verbinden; und
e. ein oder mehrere Steuermodule, die mit dem genannten Schaltmodul und einer externen Managementeinheit verbunden sind, zur Konfiguration und Steuerung der genannten Medienformatmatrix;
Einspeisung eines unkomprimierten Datenstroms in das System;
Überfiihrung des genannten Datenstroms in ein gewünschtes komprimiertes Format und/oder eine gewünschte Bit-Rate; und
Übertragung der genannten komprimierten Daten an eines der genannten Schaltmodule.

19. Verfahren gemäß Anspruch 18, in dem die genannte Medienformatmatrix zusätzlich ein oder mehrere Vorverarbeitungsmodule, die mit dem genannten Schaltmodul verbunden sind, umfasst; und
zusätzlich nach dem Schritt des Einspeisens eines umkomprimierten Datenstroms einen Schritt der Vorverarbeitung des unkomprimierten Datenstroms umfasst.

20. Verfahren gemäß Anspruch 18, in dem die genannte Medienformatmatrix zusätzlich ein oder mehrere Decodermodule umfasst; und
nach dem Schritt des Überfiihrens zusätzlich einen Schritt des Erzeugens einer zusätzlichen Kopie der genannten komprimierten Daten und des Leitens der zusätzlichen Kopie zu einem der Decodermodule umfasst.

21. Verfahren gemäß Anspruch 20, in dem das genannte Decodermodul die genannte zusätzliche Kopie der genannten komprimierten Daten dekodiert und die dekodierten Daten mit dem genannten unkomprimierten Datenstrom, eingespeist in das System, verglichen werden.

22. Verfahren gemäß Anspruch 18, in dem der genannte unkomprimierte Datenstrom über eine Schnittstelle eines der genannten Encodermodule eingespeist wird.

23. Verfahren gemäß Anspruch 19, in dem der genannte unkomprimierte Datenstrom über eines der genannten Vorverarbeitungsmodule eingespeist wird.

24. Verfahren gemäß Anspruch 18, nach dem genannten Schritt der Übertragung zusätzlich umfassend die folgenden Schritte:
Leiten der komprimierten Daten von dem genannten Schaltmodul zu einem der genannten NIC-Module; und
Übertragen der genannten komprimierten Daten zu einem Übertragungsnetzwerk.

25. Verfahren gemäß Anspruch 18, nach dem Schritt der Übertragung zusätzlich umfassend die folgenden Schritte:
Leiten der genannten komprimierten Daten vom genannten Schaltmodul zu einem der genannten Schnittstellenmodule für komprimierte Datenströme; und
Übertragen der genannten komprimierten Daten aus der genannten Medienformatmatrix zu einer Schnittstelle für komprimierte Datenströme.

26. Verfahren zur Decodierung von Video-/Audioströmen, umfassend die folgenden Schritten:
Bereitstellen eines Streaming- und. Schaltsystems, das eine Medienformatmatrix umfasst, wobei die genannte Medienformatmatrix umfasst:
a. mindestens ein Schaltmodul mit Stemtopologie zum Managen von Netzwerkstreaming innerhalb der Medienformatmatrix;
b. ein oder mehrere Decodermodule, die mit dem genannten Schaltmodul verbunden sind, um komprimierte Video-/Audiodaten zu empfangen und in ein vorab definiertes unkomprimiertes Format zu überführen;
c. eine oder mehrere Schnittstellenmittel, verbunden mit dem genannten Schaltmodul, um komprimierte Daten zwischen der genannten Schalteinheit und einer externen Medienschnittstelle zu übertragen; und
d. ein oder mehrere Steuermodule, die mit dem genannten Schaltmodul und einer externen Managementeinheit verbunden sind, zur Konfiguration und Steuerung der genannten Medienformatmatrix;
Einspeisen eines komprimierten Datenstroms in das System und Übertragung an eines der genannten Schaltmodule;
Leiten des komprimierten Datenstroms vom genannten Schaltmodul an eines oder mehrere Decodermodule; und
Decodieren des genannten Datenstroms in eines oder mehrere unkomprimierte Formate.

27. Verfahren gemäß Anspruch 26, in dem die genannten Schnittstellenmittel ein oder mehrere Schnittstellenmodule für komprimierte Datenströme umfassen, die mit dem Schaltmodul verbunden sind.

28. Verfahren gemäß Anspruch 26, in dem die genannten Schnittstellenmittel ein oder mehrere NIC-Module umfassen, die mit dem genannten Schaltmodul verbunden sind.

29. Verfahren zum Transcodieren von Audio-/Videoströmen, das folgenden Schritte umfasst:
Bereitstellung eines Streaming- und Schaltsystems, das eine Medienformatmatrix umfasst, wobei die Medienformatmatrix umfasst:
a. mindestens ein Schaltmodul mit Stemtopologie zum Managen von Netzwerkstreaming innerhalb der genannten Medienformatmatrix;
b. ein oder mehrere Schnittstellenmittel, die mit dem genannten Schaltmodul verbunden sind, zur Übertragung komprimierter Daten zwischen der genannten Schalteinheit und einem externen Netzwerk;
c. ein oder mehrere Transcodermodule, die mit dem genannten Schaltmodul verbunden sind, um komprimierte Datenströme von der genannten Schalteinheit zu empfangen, diese in unterschiedliche komprimierte Formate zu transcodieren und den genannten unterschiedlich komprimierten Datenstrom an die Schalteinheit zurück zu übertragen;
d. ein oder mehrere Steuermodule, die mit dem genannten Schaltmodul und einer externen Managementeinheit verbunden sind, zur Konfiguration und Steuerung der genannten Medienformatmatrix;
Einspeisen eines komprimierten Datenstroms in das System;
Übertragung des genannten komprimierten Datenstroms zu einem der genannten Schaltmodule;
Leiten des genannten komprimierten Datenstroms an eines oder mehrere der genannten Transcodermodule;
Transcodieren des genannten komprimierten Datenstroms in ein gewünschtes Format oder eine gewünschte Bit-Rate oder Auflösung; und
Übertragen des genannten transcodierten Datenstromes an eines der genannten Schaltmodule.

30. Verfahren gemäß Anspruch 29, in dem die genannten Schnittstellenmittel eine oder mehrere Schnittstellenmodule für komprimierte Datenströme umfassen.

31. Verfahren gemäß Anspruch 29, in dem die genannten Schnittstellenmodule ein oder mehrere NIC-Modulen umfassen.

32. Verfahren gemäß Anspruch 31, das zusätzlich die Schritte umfasst:
Übertragen des genannten transcodierten Datenstroms vom genannten Schaltmodul an eines der genannten NIC-Module; und
Übertragen des genannten transcodierten Datenstroms vom genannten NIC-Modul an ein Netzwerk.

33. Verfahren gemäß Anspruch 30, das zusätzlich die folgenden Schritte umfasst:
Übertragen des genannten transcodierten Datenstroms vom genannten Schaltmodul zu einem der genannten Schnittstellenmodule für komprimierte Datenströme; und
Ausgabe des genannten transcodierten Datenstroms über das genannte Schnittstellenmodul für komprimierte Datenströme.

34. Verfahren gemäß Anspruch 29, in dem die genannte Medienformatmatrix zusätzlich ein oder mehrere Decodermodule umfasst; und wobei das Verfahren zusätzlich die folgenden Schritte umfasst:
Übertragen des genannten transcodierten Datenstroms vom genannten Schaltmodul zu einem der genannten Decodermodule;
Decodieren des genannten transcodierten Datenstroms; und
Überwachen des genannten decodierten Datenstroms.

## Revendications

1. Système de transit et commutation vidéo/audio modulaire, sans stockage, extensible en temps réel, comprenant : une matrice de format média, celle-ci comprenant :
a. au moins un module de matrice de commutation de paquets à topologie en étoile, pour la gestion du transit de réseau à l'intérieur de ladite matrice de format média ;
b. un ou plusieurs modules contrôleurs connectés à au moins un de ces modules de matrice de commutation et à une unité de gestion externe, pour configurer et contrôler ladite matrice de format média ; et
au moins un parmi un groupe consistant en :
c. un ou plusieurs modules encodeurs connectés audit module de matrice de commutation, pour recevoir la vidéo et l'audio non compressés et les convertir à un format compressé prédéfini ;
d. un ou plusieurs modules de décodage connectés audit module de matrice de commutation, pour recevoir la vidéo et l'audio compressés et les convertir à un format non compressé prédéfini ;
e. un ou plusieurs modules d'interface de flux compressé connecté audit module de matrice de commutation, pour transmettre des données compressées entre ladite matrice de commutation et une interface de média externe ;
f. un ou plusieurs modules de transcodage connectés audit module de matrice de commutation, pour recevoir des flux compressés de ladite matrice de commutation, les transcoder en différents formats compressés et renvoyer lesdits flux compressés à la matrice de commutation ;
g. un ou plusieurs modules NIC connectés audit module de matrice de commutation, pour connecter entre ladite matrice de format média et un ou plusieurs réseaux de distribution, et
h. un ou plusieurs modules de pré-traitement connectés audit module de matrice de commutation, pour traiter des flux non compressés.

2. Système de la revendication 1, comprenant en plus un mécanisme communicateur connecté à ladite matrice de format média, pour introduire des flux provenant de réseaux de distribution locaux ou étendus dans la matrice et pour sortir des flux de la matrice vers des réseaux de distribution locaux ou étendus.

3. Système de la revendication 1, dans lequel ladite unité de gestion externe est opérable pour communiquer à un ou plusieurs desdits modules contrôleurs une configuration de ladite matrice.

4. Système de la revendication 1, dans lequel un ou plusieurs desdits modules de matrice de commutation utilisent un protocole de réseau standard.

5. Système de la revendication 4, dans lequel ledit protocole de réseau standard est l'IP sur Ethernet.

6. Système de la revendication 1, dans lequel ladite matrice de format média est connectée à de multiples canaux d'entrée.

7. Système de la revendication 6, dans lequel lesdits multiples canaux d'entrée comprennent du vidéo/audio compressé et du vidéo/audio non compressé.

8. Système d'une des revendications 1 ou 6, dans lequel ladite matrice de format média est connectée à de multiples canaux de sortie.

9. Système de la revendication 8, dans lequel lesdites multiples canaux de sortie comprennent du vidéo/audio compressé et du vidéo/audio non compressé.

10. Système de la revendication 1, dans lequel lesdits modules de matrice de format média et ladite unité de gestion externe utilisent un protocole de gestion commun.

11. Système de la revendication 10, dans lequel ledit protocole de gestion commun est le SNMP.

12. Système de la revendication 1, dans lequel ladite ou lesdites interfaces de flux compressé servent en plus à l'embrouillage et/ou au désembrouillage des signaux compressés.

13. Système de la revendication 1, comprenant plus d'un seul module de matrice de commutation, et où chacun desdits module de matrice de commutation est connecté à au moins un autre desdits modules de matrice de commutation, et dans lequel lesdits modules de matrice de commutation créent une grappe de modules de matrice de commutation connectés.

14. Système de la revendication 1, comprenant plus d'un seul module de matrice de commutation, et où chacun desdits modules de matrice de commutation est connecté à tous lesdits modules de matrice de format média pour permettre la redondance desdits modules de matrice de format média.

15. Système de la revendication 1, dans lequel un ou plusieurs desdits modules contrôleurs contrôlent des éléments de réseau externe.

16. Système de la revendication 15, dans lequel lesdits éléments de réseau externe comprennent un parmi le groupe comprenant un routeur et un aiguilleur vidéo.

17. Système de la revendication 1, dans lequel ladite unité de gestion externe contrôle directement au moins un desdits modules de matrice de format média.

18. Méthode d'encodage des flux de données vidéo/audio, comprenant les étapes de :
fourniture d'un système de transit et commutation comprenant une matrice de format média, celle-ci comprenant :
a. au moins un module de matrice de commutation à topologie en étoile, pour gérer le transit de réseau à l'intérieur de ladite matrice de format média ;
b. un ou plusieurs modules encodeurs connectés audit module de matrice de commutation, pour recevoir la vidéo ou l'audio non compressé(e) et le/la convertir à un format compressé prédéfini ;
c. un ou plusieurs modules d'interfaces de flux compressé connectés audit module de matrice de commutation, pour transmettre des données compressées entre ladite matrice de commutation et une interface de média externe ;
d. un ou plusieurs modules NIC connectés audit module de matrice de commutation, pour connecter entre ladite matrice de format média et un ou plusieurs réseaux de distribution ; et
e. un ou plusieurs modules de contrôleur connectés audit module de matrice de commutation et à une unité de gestion externe, pour configurer et contrôler ladite matrice de format média ;
introduction d'un flux de données non compressé dans le système ;
conversion dudit flux de données à un format compressé et/ou un débit binaire désiré ; et
transmission desdites données compressées vers un desdits modules de matrice de commutation.

19. Méthode de la revendication 18, dans laquelle ladite matrice de format média comprend en plus un ou plusieurs modules de pré-traitement connectés audit module de matrice de commutation ; et
comprenant en plus, après ladite étape d'introduction d'un flux de données non compressé, une étape de pré-traitement dudit flux de données décompressé.

20. Méthode de la revendication 18, dans laquelle ladite matrice de format média comprend en plus un ou plusieurs modules de décodage, et
comprenant en plus, après ladite étape de conversion, une étape de génération d'une copie supplémentaire desdites données compressées et l'acheminement de ladite copie supplémentaire vers un desdits modules de décodage.

21. Méthode de la revendication 1, dans laquelle ledit module décodeur décode ladite copie supplémentaire desdites données compressées et dans laquelle lesdites données compressées sont comparées à ladite entrée de flux de données décompressé dans le système.

22. Méthode de la revendication 18, dans laquelle ledit flux de données non compressé est introduit par le biais d'une interface d'un desdits modules d'encodage.

23. Méthode de la revendication 19, dans laquelle ledit flux de données non compressé est introduit par le biais d'un desdits modules de pré-traitement.

24. Méthode de la revendication 18, comprenant en plus, après ladite étape de transmission, les étapes de :
acheminement desdites données compressées dudit module de matrice de commutation vers un desdits modules NIC, et
transmission desdites données compressées à un réseau de distribution.

25. Méthode de la revendication 18, comprenant en plus, après ladite étape de transmission, les étapes de :
acheminement desdites données compressées dudit module de matrice de commutation vers un desdits modules d'interface de flux compressé, et
transmission desdites données compressées hors de ladite matrice de format média sur une interface de flux compressé.

26. Méthode de décodage des flux de données vidéo/audio, comprenant les étapes de :
fourniture d'un système de transit et commutation comprenant une matrice de format média, celle-ci comprenant :
a. au moins un module de matrice de commutation à topologie en étoile, pour gérer le transit de réseau à l'intérieur de ladite matrice de format média ;
b. un ou plusieurs modules de décodage connectés audit module de matrice de commutation, pour recevoir la vidéo ou l'audio compressé(e) et le/la convertir à un format non compressé prédéfini ;
c. un ou plusieurs des moyens d'interfaçage connectés audit module de matrice de commutation, pour transmettre des données compressées entre ladite matrice de commutation et une interface de média externe, et
d. un ou plusieurs modules contrôleurs connectés audit module de matrice de commutation et à une unité de gestion externe, pour configurer et contrôler ladite matrice de format média ;
introduction d'un flux de données compressé dans le système et sa transmission à un desdits modules de matrice de commutation ;
acheminement dudit flux compressé du dit module de matrice de commutation vers un ou plusieurs desdits modules de décodage, et
décodage dudit flux en un ou plusieurs formats non compressés.

27. Méthode de la revendication 26, dans laquelle ledit moyen d'interfaçage comprend un ou plusieurs modules d'interface de flux compressé connectés audit module de matrice de commutation.

28. Méthode de la revendication 26, dans laquelle ledit moyen d'interfaçage comprend un ou plusieurs modules NIC connectés audit module de matrice de commutation.

29. Méthode de transcodage des flux de données vidéo/audio, comprenant les étapes de :
fourniture d'un système de transit et commutation comprenant une matrice de format média, celle-ci comprenant :
a. au moins un module de matrice de commutation en étoile, pour gérer le transit de réseau à l'intérieur de ladite matrice de format média ;
b. un ou plusieurs moyens d'interfaçage connectés audit module de matrice de commutation, pour transmettre des données compressées entre ladite matrice de commutation et un réseau externe ;
c. un ou plusieurs modules de transcodage connectés audit module de matrice de commutation, pour recevoir des flux compressés de ladite matrice de commutation, les transcoder en différents formats compressés et le(s) renvoyer à ladite matrice de commutation ; et
d. un ou plusieurs modules contrôleurs connectés audit module de matrice de commutation et à une unité de gestion externe, pour configurer et contrôler ladite matrice de format média ;
introduction d'un flux de données compressé dans le système ; transmission dudit flux compressé vers un desdits modules de matrice de commutation ;
acheminement dudit flux compressé vers un ou plusieurs desdits modules de transcodage ;
transcodage dudit flux compressé à un format ou un débit binaire ou une résolution désiré(e); et
transmission dudit flux transcodé vers un desdits modules de matrice de commutation.

30. Méthode de la revendication 29, dans laquelle lesdits moyens d'interfaçage comprennent un ou plusieurs modules d'interface de flux compressé.

31. Méthode de la revendication 29, dans laquelle lesdits moyens d'interfaçage comprennent un ou plusieurs modules NIC.

32. Méthode de la revendication 31, comprenant en plus les étapes de :
transmission dudit flux transcodé dudit module de matrice de commutation vers un desdits modules NIC ; et
transmission dudit flux transcodé dudit module NIC vers un réseau.

33. Méthode de la revendication 30, comprenant en plus les étapes de :
transmission dudit flux transcodé dudit module de matrice de commutation vers un desdits modules d'interface de flux compressé ; et
sortie dudit flux transcodé dudit module d'interface de flux compressé.

34. Méthode de la revendication 29, dans laquelle ladite matrice de format média comprend en plus un ou plusieurs modules de décodage ; et comprend en plus les étapes de :
transmission dudit flux transcodé dudit module de matrice de commutation vers un desdits modules de décodage ;
décodage dudit flux transcodé ; et
surveillance dudit flux décodé.
